# FASCICULE DE BREVET EUROPEEN

(11) **EP 1 870 355 B1**
(45) Date de publication et mention de la délivrance du brevet: **02.09.2009**
(21) Numéro de dépôt: 07011363.4
(22) Date de dépôt: 11.06.2007
(51) Int. Cl.: B65G 47/90, C03B 35/12

(54) **Dispositif de transfert d'un objet d'un poste à un autre sur une chaîne de fabrication**
Vorrichtung zum Transfer eines Gegenstands von einem Ort auf einer Fertigungslinie an einen anderen
Device for transferring from one station to another in a production line

(30) Priorité: 21.06.2006 FR 0605531
(43) Date de publication de la demande: 26.12.2007
(73) Titulaire: Saverglass SAS, 60960 Feuquieres (FR)
(72) Inventeur: Chireux, Denis, F-25000 Besancon (FR)
(74) Mandataire: Bentz, Jean-Paul

(56) Documents cités:
- DE-A1- 1 456 742
- GB-A- 1 264 622
- JP-A- 7 010 278
- US-A1- 4 020 707
- US-A1- 2003 113 198

## Description

La présente invention concerne un dispositif de transfert d'un objet d'un poste à un autre sur une chaîne de fabrication, selon le préambule de la revendication 1.

Plus précisément, elle concerne un dispositif destiné à effectuer des opérations de préhension et de dépose d'un objet en cours ou en fin de fabrication, mais nécessitant d'être retourné pour réaliser, par exemple des opérations de finition.

A titre d'exemple non limitatif, on rencontre ceci dans l'industrie verrière lorsqu'il s'agit de réaliser un bouchon en verre destiné à une carafe ou flacon de prestige devant contenir un alcool, un parfum etc.

En effet, en sortie de moule, l'objet, en l'occurrence le bouchon, se présente la tête en bas et il est saisi par des moyens de préhension, généralement des pinces, au niveau d'une coupelle, appelée également « carotte », de laquelle est issu le bouchon et qui sera supprimé par la suite, pour être recyclée éventuellement.

L'objet est donc saisi à l'envers par les pinces et maintenu en l'air dans cette position pour qu'il refroidisse, puis lâché, par ouverture des pinces, sur une plaque de repos où il refroidira totalement, toujours tête en bas.

Un opérateur intervient alors manuellement afin de remettre le bouchon à l'endroit et être convoyé vers des postes de finition comme le polissage, s'effectuant à la flamme, dit aussi « brulage », afin de faire disparaître certains défauts tels que : frisures, raccords au niveau du plan de joint du moule, bavures, etc.

Toutes les opérations manuelles sont bien entendu onéreuses et doivent être supprimées dans la mesure du possible.

A noter également que le fait de déposer le bouchon sur la tête sur la plaque de repos peut provoquer un choc thermique, du fait de l'écart de température entre celle-ci à température ambiante et le bouchon encore très chaud. Il peut alors s'en suivre des rayures sur la tête du bouchon, sans exclure les fêlures, voire même les cassures, dues au choc mécanique, si le bouchon est lâché sur la plaque de repos de façon brutale, c'est-à-dire au-delà d'une certaine distance.

Un dispositif de transfert d'un objet selon le préambule de la revendication 1 est exposée dans le document JP-A-07010278.

La présente invention a pour but de remédier à l'ensemble des inconvénients précités et concerne à cet effet un dispositif de transfert d'un objet d'un poste à un autre selon la revendication 1.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente une vue en perspective d'un dispositif de transfert d'objet selon l'invention.

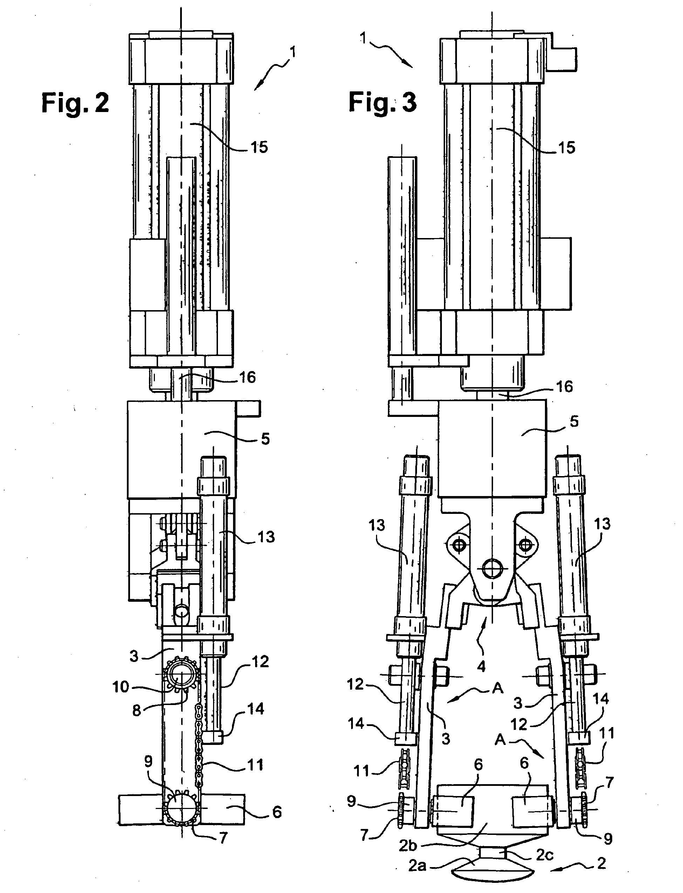

La figure 2 est une vue de côté du dispositif selon la figure 1.
La figure 3 est une vue de face d'un dispositif selon les figures 1 et 2.
La figure 4 est une vue en perspective d'un pantographe constituant un élément des moyens de préhension et de dépose de l'objet.
La figure 5 est une vue frontale d'un pantographe selon la figure 4.
La figure 6 est une vue de côté du pantographe selon la figure 5.
Les figures 7 et 8 sont des vues en coupe selon la ligne AA de la figure 6, respectivement en position ouverte et en position fermée.

Selon l'invention, le dispositif de transfert 1 globalement désigné sur les figures comporte, en combinaison :
- des moyens mécaniques et automatiques A de préhension et de dépose de l'objet 2 ;
- des moyens mécaniques et automatiques B de retournement de celui-ci agissant entre sa préhension et sa dépose ;
- des moyens mécaniques et automatiques C de montée et de descente verticales de l'ensemble, et

les moyens de préhension et de dépose A de l'objet 2 sont constitués par deux bras articulés 3, reliés entre eux à leur partie supérieure par un pantographe 4, lui-même en liaison avec un vérin à action verticale 5 provoquant la fermeture angulaire des bras 3 en montée M pour préhender la pièce 2 et l'ouverture angulaire des bras 3 en descente D pour libérer et déposer la pièce 2, après retournement.

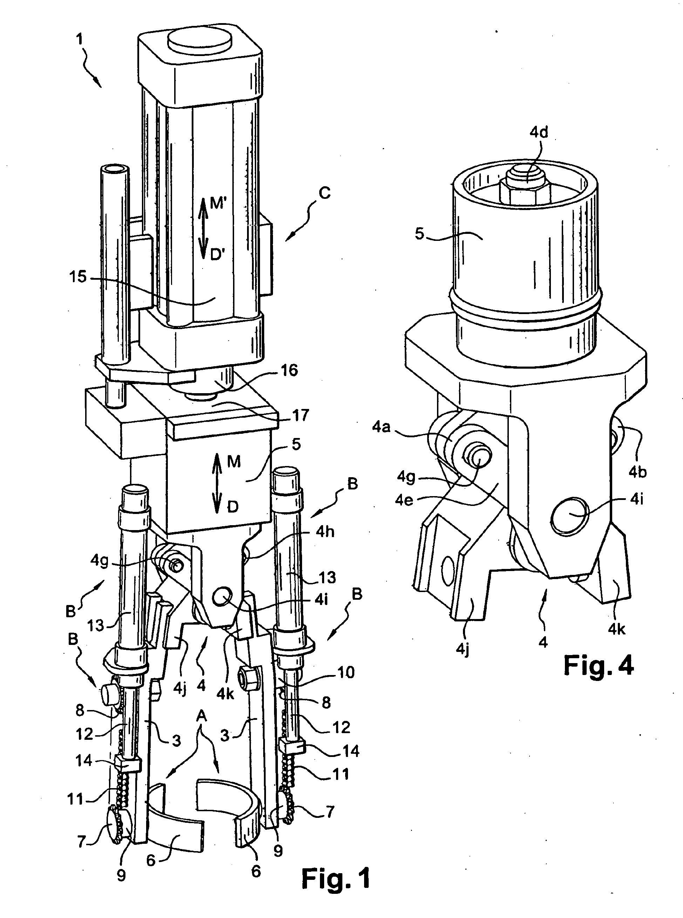

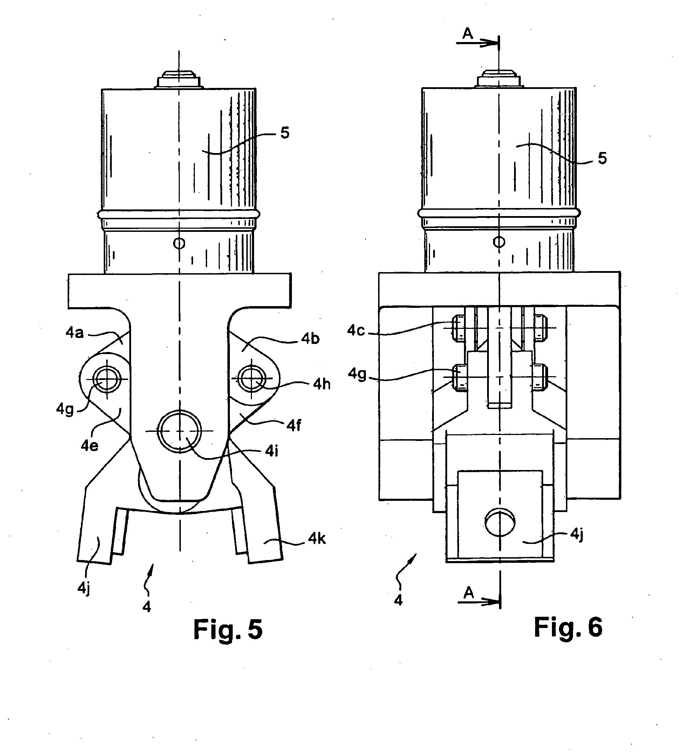

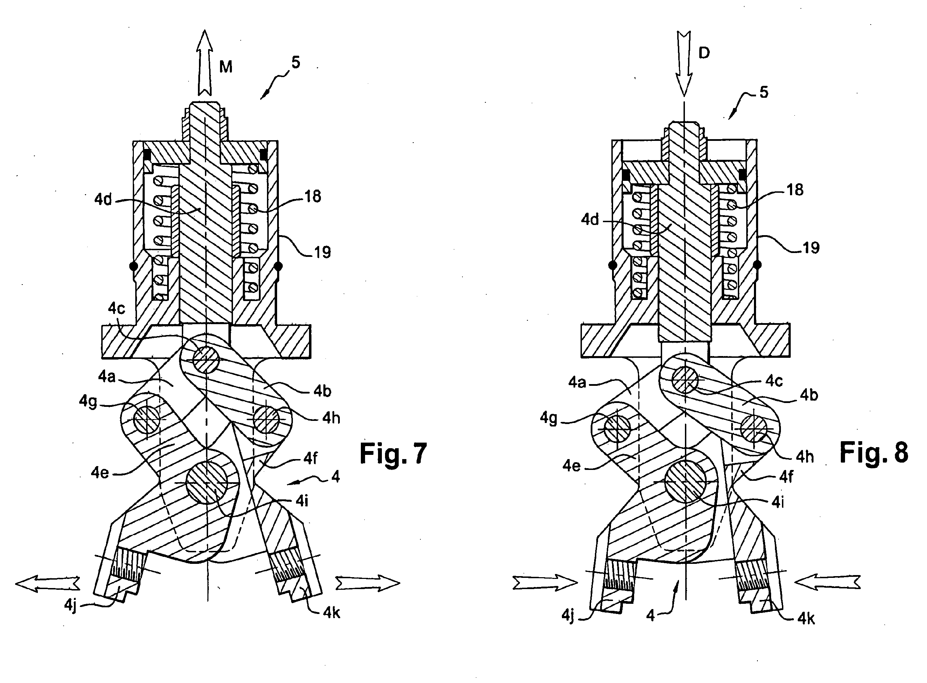

Le pantographe 4 représenté sur les figures 4, 5, 6, 7 et 8 est constitué par deux biellettes 4a, 4b s'articulant autour d'un axe 4c, solidaire en montée et descente d'un élément 4d actionné par le piston 5.

Les biellettes 4a, 4b du piston 5 agissant à l'encontre d'un ressort de rappel 18 logé dans un corps de piston 19 sont elles-mêmes reliées à deux autres éléments 4e, 4f du parallélogramme 4 par l'intermédiaire d'articulations 4g, 4h reliés à leur autre extrémité sur une articulation 4i.

C'est ainsi qu'une action en poussée vers la descente « D » du vérin 5 provoquera la fermeture des éléments 4e, 4f, eux-mêmes en liaison avec les bras 3 par leur extrémité libre 4j, 4k, par l'intermédiaire de moyens d'assemblage (non représentés).

Une action en ouverture sur les éléments 4e, 4f, et donc sur les pinces 6 solidaires des bras 3 est obtenue par une action en montée « M » du vérin 5.

D'une manière générale, les moyens de retournement sont constitués par deux pinces rotatives 6 disposés en vis-à-vis aux extrémités libres inférieures de chaque bras articulés 3, chacune des pinces 6 étant entraînée en rotation, en synchronisme par tous moyens d'entraînement distincts ou reliés entre eux.

Selon le présent exemple de réalisation, les moyens d'entraînement en rotation de chacune des pinces 6 sont constitués par deux pignons 7, 8 disposés à l'extérieur d'un bras 3 correspondant, par l'intermédiaire de deux axes 9, 10 traversant librement et perpendiculairement ledit bras 3, le pignon inférieur d'extrémité 7 étant solidaire de la pince 6, par l'intermédiaire de l'axe 9, la liaison entre le pignon inférieur 9 et le pignon supérieur 10 s'effectuant par l'intermédiaire d'une courroie ou chaîne 11, elle-même entraînée en rotation par le piston 12 d'un vérin 13 également solidaire du bras 3, dont l'extrémité est rendue solidaire d'un point fixe extérieur 14 de la courroie ou chaîne 11, de manière à transformer le déplacement linéaire du piston 12 en un mouvement rotatif, de valeur prédéterminée, de la courroie ou chaîne 11 et conséquemment du pignon 7, 8, 9 et de la pince 6, dans un sens de retournement de l'objet 2, puis dans un sens contraire de retour en position initiale, après dépose dudit objet initialement préhendé par les deux pinces 6.

Avantageusement, les bras articulés 3 munis de leurs pinces respectives 6, les deux pignons 7, 8 et leurs courroies ou chaîne 11, les vérins 13 de commande en rotation des pinces 6, et le vérin 5 de commande en ouverture-fermeture des bras, constituent un ensemble mobile susceptible d'être entraîné dans un déplacement vertical de montée « M » et de descente « D » après préhension de l'objet 2 ou en vue de sa dépose après retournement.

Les moyens de montée et de descente C de l'ensemble mobile sont constitués par un vérin 15, solidaire d'un bâti fixe, dont le piston 16 est solidaire, par son extrémité libre, d'un point supérieur 17 dudit ensemble mobile.

Les vérins 13 de commande en rotation des pinces 6, et le vérin 5 de commande en ouverture-fermeture des bras 3, le vérin 15 de montée et de descente de l'ensemble mobile, sont actionnés par un circuit hydraulique ou pneumatique intervenant de manière programmée en fonction des temps d'opérations requis, de leur ordre, ainsi que de la cadence de production de l'objet 2 à saisir, retourner et déposer.

L'objet 2 représenté est, selon le présent exemple, un bouchon comportant une tête 2a, à protéger de tout contact avec la plaque de repos, laquelle tête 2a est reliée à une coupelle ou carotte 2b par une queue 2c du bouchon. La coupelle 2b est la partie de préhension du bouchon et ne nécessite pas de précaution particulière car elle sera sectionnée et éliminée après les opérations de finition, au cours desquelles elle constitue en fait une base d'appui.

## Revendications

1. Dispositif de transfert (1) d'un objet (2) d'un poste à un autre par des opérations de préhension, de dépose et de retournement, comportant : des moyens mécaniques et automatiques (A) de préhension et de dépose de l'objet (2) ; des moyens mécaniques et automatiques (B) de retournement de celui-ci agissant entre sa préhension et sa dépose ; des moyens mécaniques et automatiques (C) de montée et de descente verticales de l'ensemble, **caractérisé en ce que** les moyens de préhension et de dépose (A) de l'objet (2) sont constitués par deux bras articulés (3), reliés entre eux à leur partie supérieure par un pantographe (4), lui-même en liaison avec un vérin à action verticale (5) provoquant la fermeture angulaire des bras (3) en montée (M) pour préhender la pièce (2) et l'ouverture angulaire des bras (3) en descente (D) pour libérer et déposer la pièce (2), après retournement.

2. Dispositif selon la revendication 1, **caractérisé en ce que** les moyens de retournement sont constitués par deux pinces rotatives (6) disposés en vis-à-vis aux extrémités libres inférieures de chaque bras articulés (3), chacune des pinces (6) étant entraînée en rotation, en synchronisme par tous moyens d'entraînement distincts ou reliés entre eux.

3. Dispositif selon la revendication 2, **caractérisé en ce que** les moyens d'entraînement en rotation de chacune des pinces (6) sont constitués par deux pignons (7, 8) disposés à l'extérieur d'un bras (3) correspondant, par l'intermédiaire de deux axes (9, 10) traversant librement et perpendiculairement ledit bras (3), le pignon inférieur d'extrémité (7) étant solidaire de la pince (6), par l'intermédiaire de l'axe (9), la liaison entre le pignon inférieur (9) et le pignon supérieur (10) s'effectuant par l'intermédiaire d'une courroie ou chaîne (11), elle-même entraînée en rotation par le piston (12) d'un vérin (13) également solidaire du bras (3), dont l'extrémité est rendue solidaire d'un point fixe extérieur (14) de la courroie ou chaîne (11), de manière à transformer le déplacement linéaire du piston (12) en un mouvement rotatif, de valeur prédéterminée, de la courroie ou chaîne (11) et conséquemment du pignon (7, 8, 9) et de la pince (6), dans un sens de retournement de l'objet (2), puis dans un sens contraire de retour en position initiale, après dépose dudit objet initialement préhendé par les deux pinces (6).

4. Dispositif selon l'une des revendications 1 à 3, **caractérisé en ce que** les bras articulés (3) munis de leurs pinces respectives (6), les deux pignons (7, 8) et leurs courroies ou chaîne (11), les vérins (13) de commande en rotation des pinces (6), et le vérin (5) de commande en ouverture-fermeture des bras, constituent un ensemble mobile susceptible d'être entraîné dans un déplacement vertical de montée (M) et de descente (D) après préhension de l'objet (2) ou en vue de sa dépose après retournement.

5. Dispositif selon la revendication 4, **caractérisé en ce que** les moyens de montée et de descente (C) de l'ensemble mobile sont constitués par un vérin (15), solidaire d'un bâti fixe, dont le piston (16) est solidaire, par son extrémité libre, d'un point supérieur (17) dudit ensemble mobile.

6. Dispositif selon l'une des revendications 1 à 5, **caractérisé en ce que** les vérins (13) de commande en rotation des pinces (6), et le vérin (5) de commande en ouverture-fermeture des bras (3), le vérin (15) de montée et de descente de l'ensemble mobile, sont actionnés par un circuit hydraulique ou pneumatique intervenant de manière programmée en fonction des temps d'opérations requis, de leur ordre, ainsi que de la cadence de production de l'objet (2) à saisir, retourner et déposer.

## Claims

1. Device (1) for transferring an object (2) from one station to another by operations of grasping, depositing and inverting, comprising: mechanical and automatic means (A) for grasping and depositing the object (2); mechanical and automatic means (B) for inverting the object, these means acting between the grasping and depositing steps; and mechanical and automatic means (C) for vertically raising and lowering the system; said device being **characterized in that** the means (A) for grasping and depositing the object (2) consist of two articulated arms (3) connected together at their top by a pantograph (4) which in turn is connected to a vertically acting actuator (5) causing angular closure of the arms (3) on the upstroke (M) so as to grasp the part (2) and angular opening of the arms (3) on the downstroke (D) so as to release and deposit the part (2), after inversion.

2. Device according to Claim 1, **characterized in that** the inverting means consist of two mutually opposite rotatable grippers (6) at the lower free ends of each articulated arm (3), each of the grippers (6) being rotated in synchronization by any mutually independent or interconnected drive means.

3. Device according to Claim 2, **characterized in that** the drive means for rotating each of the grippers (6) consist of two sprockets (7, 8) mounted on the outside of a corresponding arm (3) via two spindles (9, 10) passing freely and perpendicularly through said arm (3), the lower end sprocket (7) being connected to the gripper (6) via the spindle (9), the connection between the lower sprocket (9) and the upper sprocket (10) being via a belt or chain (11) which in turn is drawn round by the piston (12) of an actuator (13) also mounted on the arm (3), whose end is connected to a fixed external point (14) of the belt or chain (11) in such a way as to turn the linear movement of the piston (12) into a rotary movement, of predetermined magnitude, of the belt or chain (11) and hence of the sprocket (7, 8, 9) and of the gripper (6), in a direction such as to invert the object (2), and then in a contrary direction such as to return it to the initial position, after depositing said object which had initially been grasped by the two grippers (6).

4. Device according to one of Claims 1 to 3, **characterized in that** the articulated arms (3) with their respective grippers (6), the two sprockets (7, 8) and their belts or chains (11), with the actuators (13) for rotating the grippers (6), and the actuator (5) for opening and closing the arms, form a movable system that can be driven in a vertical upstroke (M) and downstroke (D) movement after grasping the object (2) or for the purpose of depositing it after inverting it.

5. Device according to Claim 4, **characterized in that** the means (C) for raising and lowering the movable system consist of an actuator (15) connected to a fixed frame, its piston (16) being connected via its free end to an upper point (17) of said movable system.

6. Device according to one of Claims 1 to 5, **characterized in that** the control actuators (13) for rotating the grippers (6), the control actuator (5) for opening and closing the arms (3), and the actuator (15) for raising and lowering the movable system are operated by a hydraulic or pneumatic circuit working in a programmed manner based on the required operating times, their order, and the rate at which the object (2) to be grasped, inverted and deposited is produced.

## Patentansprüche

1. Vorrichtung (1) zum Transfer eines Gegenstands (2) von einem Ort zu einem anderen durch Greifvorgänge, Absetzvorgänge und Umdrehvorgänge, umfassend: eine mechanische, automatische Einrichtung (A) zum Greifen und Absetzen des Gegenstandes (2); eine mechanische, automatische Einrichtung (B) zum Umdrehen desselben, die zwischen dessen Ergreifung und dessen Absetzen wirksam ist; eine mechanische, automatische Einrichtung (C) zum vertikalen Anheben und Absenken der Gesamtheit, **dadurch gekennzeichnet, dass** die Einrichtung (A) zum Greifen und Absetzen des Gegenstandes (2) aus zwei Gelenkarmen (3) gebildet ist, die an ihrem oberen Abschnitt durch einen Pantografen (4) miteinander verbunden sind, der mit einem vertikal wirkenden Zylinder (5) in Verbindung steht, der beim Aufsteigen (M) das scherenartige Schließen der Arme (3) zum Greifen des Teils (2) bewirkt und nach dem Umdrehen das scherenartige Öffnen der Arme (3) beim Absenken (D) bewirkt, um das Teil (2) loszulassen und abzusetzen.

2. Vorrichtung nach Anspruch 1, **dadurch gekennzeichnet, dass** die Einrichtung zum Umdrehen aus zwei drehbaren Zangen (6) gebildet ist, welche sich gegenüberliegend an den freien unteren Enden jedes der beiden Gelenkarme (3) angeordnet sind, wobei jede der Zangen (6) synchron im Rotationssinn angetrieben wird durch voneinander getrennte oder miteinander verbundene, beliebige Antriebsmittel.

3. Vorrichtung nach Anspruch 2, **dadurch gekennzeichnet, dass** die rotatorischen Antriebsmittel jeder der Zangen (6) aus zwei Zahnrädern (7, 8) gebildet sind, die an der Außenseite eines entsprechenden Arms über zwei Achsen (9, 10), die rechtwinklig und frei drehend den Arm (3) durchdringen, angeordnet sind, wobei das untere Zahnrad (7) des Armendes über die Achse (9) mit der Zange (6) fest verbunden ist und die Verbindung zwischen dem unteren Zahnrad und dem oberen Zahnrad (10) über einen Keilriemen oder eine Kette (11) erzeugt wird, die im Rotationssinn angetrieben wird vom Kolben (12) eines Zylinders (13), der ebenfalls mit dem Arm (3) fest verbunden ist, dessen Ende mit einem äußeren Befestigungspunkt (14) des Keilriemen oder der Kette (1) fest verbunden ist, um die Linearbewegung des Kolbens (12) in eine Rotationsbewegung des Keilriemens oder der Kette (11) und damit des Zahnrades (7, 8, 9) und der Zange (6) mit vorbestimmtem Wert umzuwandeln in Richtung des Umdrehens des Gegenstandes (2) und dann in umgekehrter Richtung zur Rückkehr in die Ausgangsposition nach dem Absetzen des Gegenstandes, der Anfänglich mit den beiden Zangen (6) gegriffen wurde.

4. Vorrichtung nach einem der Ansprüche 1 bis 3, **dadurch gekennzeichnet, dass** die mit dem jeweiligen Zahnrad (6) ausgestatteten Gelenkarme (3), die beiden Zahnräder (7, 8) und die Keilriemen oder Ketten (11), die Zylinder (13) zum in Rotation Versetzen der Zangen (6) und der Zylinder (5) zum Bewirken des Öffnens und Schließens der Arme eine mobile Gruppe bilden, die angetrieben werden kann in einer vertikal gerichteten Aufwärtsbewegung (M) und Abwärtsbewegung (D) nach Greifen des Gegenstandes (2) oder im Hinblick auf sein Absetzen nach dem Umdrehen.

5. Vorrichtung nach Anspruch 4, **dadurch gekennzeichnet, dass** die Vorrichtung zum Anheben und Absenken (C) der mobilen Gruppe aus einem mit einem Gestell fest verbundenen Zylinder (15) gebildet ist, dessen Kolben (16) mit seinem freien Ende mit einem oberen Punkt (17) der beweglichen Gruppe fest verbunden ist.

6. Vorrichtung nach einem der Ansprüche 1 bis 5, **dadurch gekennzeichnet, dass** die Zylinder (13) zum in Rotation Versetzen der Zangen (6), und der Zylinder (5) zum Bewirken des Öffnens und Schließens der Arme (3), der Zylinder (15) zur Aufwärtsbewegung und Abwärtsbewegung der beweglichen Gruppe durch einen hydraulischen oder pneumatischen Kreislauf betätigt werden, programmiert im Hinblick auf die erforderlichen Betriebszeiten, ihrer Reihenfolge sowie der Produktionsabfolge des Gegenstandes (2) zum Greifen, Umdrehen und Absetzen.
